(19) **Europäisches Patentamt / European Patent Office / Office européen des brevets**

(11) **EP 2 716 957 B1**

(12) # EUROPEAN PATENT SPECIFICATION

(45) Date of publication and mention
of the grant of the patent:
**25.04.2018 Bulletin 2018/17**

(51) Int Cl.:
*F17C 1/06* (2006.01)    *F16J 12/00* (2006.01)
*B29C 53/60* (2006.01)    *B29C 63/24* (2006.01)

(21) Application number: **11863930.1**

(22) Date of filing: **28.11.2011**

(86) International application number:
**PCT/RU2011/000931**

(87) International publication number:
**WO 2012/144929 (26.10.2012 Gazette 2012/43)**

(54) **HIGH-PRESSURE VESSEL MADE OF COMPOSITE MATERIALS**

HOCHDRUCKBEHÄLTER AUS VERBUNDSTOFFEN

BONBONNE HAUTE PRESSION FAITE DE MATÉRIAUX COMPOSITES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.04.2014 Bulletin 2014/15**

(73) Proprietors:
• **Lukyanets, Sergei Vladimirovich
Moskovskaya obl. 141350 (RU)**
• **Moroz, Nikolai Grigorievich
Moskovskaya obl. 141350 (RU)**
• **Lebedev, Igor Konstatinovich
Moskovskaya obl. 141350 (RU)**

(72) Inventors:
• **Lukyanets, Sergei Vladimirovich
Moskovskaya obl. 141350 (RU)**
• **Moroz, Nikolai Grigorievich
Moskovskaya obl. 141350 (RU)**

• **Lebedev, Igor Konstatinovich
Moskovskaya obl. 141350 (RU)**

(74) Representative: **Kratochvil, Vaclav
Patent and Trademark Office
P.O. Box 26
295 01 Mnichovo Hradiste (CZ)**

(56) References cited:
FR-A1- 2 575 966     JP-A- 2005 106 142
RU-C1- 2 077 682     RU-C1- 2 175 088
SU-A1- 859 744

• **KOUSSIOS S ET AL: "Filament winding. Part 1:
determination of the wound body related
parameters", COMPOSITES PART A: APPLIED
SCIENCE AND MANUFACTURING, ELSEVIER
SCIENCE PUBLISHERS B.V., AMSTERDAM, NL,
vol. 35, no. 2, 1 February 2004 (2004-02-01), pages
181-195, XP004480576, ISSN: 1359-835X, DOI:
10.1016/J.COMPOSITESA.2003.10.003**

EP 2 716 957 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Cylindric vessels for compressed gases under high pressure are the devices used in various areas of national economy and technics and, in particular, can be used as a pressure vessel for the transport of compressed gases, fuel for vehicles, cylinders with air-oxygen mixtures for respiratory equipment and so on.

The present invention relates to the construction of receptacles intended for the above-specified use - storage, transportation and use of compressed gases and so on.

Basic requirements for such gas tanks consist in providing their high structural solidity at minimal fluctuation of their functional characteristics and their operational reliability at minimal weight and low material consumption values and ensuring their long service life.

Modem composite high pressure cylindric vessels include the internal thin-walled tight shell - the liner, and the external power shell made from the composite material, e.g. the cordage from high modular carbon fibres, covering the liner and impregnated with a binder.

In order to avoid any leakage of fluid or any tightness defect in cylinders of analogical type, the material of liner's tight shell is of a special importance.

There are known fabrication examples of composite high pressure cylindric vessels with the use of thermoplastics, as a basic liner's material - see, for example, the patents as follows: GB 1023011, ER 0300931, WO 99/27293, WO 99/13263, US 4925044, RU 2150634.

There are known numerous fabrication examples of high pressure cylindric vessels with the use of metal liner from different alloys - see, for example, US 5494188, US 5538680, US 5653358, US 5862938, US 5938209, US 5979692, US 6190598, US 6202674, US 6202674, US 6230922, US2003111473, 6,810,567.

There are known numerous fabrication examples of composite cylindric pressure vessels with the use of thin-walled metal liners from the different alloys - see, for example, patents US 3 066 822, US 3 446 385, US 5 027 292, US 5,822,838, US 5 918 759, WO 03/029718, RU 2255829, JP2005133847, WO2005022026, RU 2149126, RU 2094695, RU 2077682, RU 2001115743, RU 2000123739, RU 2140602, RU 2187746, RU 93049863, RU 2065544, RU 2001115191, RU 2003115384, RU 2002101904, GB1161846, EP0497687, US 5287988. Known design patterns of cylindric vessels from the composite materials, as a rule, represent the structures that are formed by winding the reinforcement material in spirals and circles. This material is distributed with different densities on the wall of the composite shell of the tank - see the above patents and the book by I.F. Obrazcov, V.V. Vasiliev V.A. Bunakov, Optimum reinforcement of rotation shells from composite materials, M., Machine-building, 1977. Construction parameters of cylinders include the composite power shell with cylindrical part and bottoms, given that the cylindrical part of the power shell contains the spiral and circular layers of composite material, whereas the cylinder bottoms include only spiral layers. Thickness ratio of circular and spiral layers in such constructions is selected to provide the technical result, which is the equally distributed solidity of pressure cylinder. This means that the destructive stress values are achieved at the same time within the spiral and circular layers. This allows to reduce significantly the weight of the vessel, as compared with its metal counterparts.

The implementation of these structures can partially solve the problem of providing for the minimal weight values and ensuring long service life of the cylinder due to the fact that, as a rule, the weight of internal liner used in the cylinder construction is up to 50% of the total weight of cylinder' structure.

At the same time, it is known that the use of special geometric shell shapes to construct the liner, for example, the spherical form in the patent RU 2256844 C1, 20.07.2005, allows to reduce significantly its weight in comparison with the liner of cylindrical shape and the analogical volume. Due to the specific shape for such a liner, also the weight of composite shell is significantly reduced. Thus, the use of rational geometric forms of the liner along with the composite material allows to provide high-performance construction of pressure vessels.

However, the provision of rational geometric forms of the liner requires structural changes in both geometry of the liner and power shell of a composite material.

Analogues of the proposed constructive solution to the execution of metal-composite cylinder with thin-walled liner are the solutions according to the patents US 5653358, EP 0714753, US 7497919, US 2007062959, US 3655085, US 4369894.

The disadvantage of the solution according to the patent US 5653358 is that in this case, the evaluated execution solution of the cylinder applies to only one certain shape, namely, that of spherical cylinder. In addition, the proposed solution is very diffcult in performance, which leads to a dramatic cylinder's price increase.

In patents US 7497919 and US 2007062959, the attempt was made to partially remove the above indicated solution impediment under the patent US 5653358, but in this case such a constructive execution even increases the complexity of its manufacturing.

The solution under the patent EP 0714753 proposes the use of a complicated meridian profile of bottoms surface, consisting of surface parts of the geodesic isotesoid, which surface provides the equal structure solidity throughout the whole length of the forming meridian and thereby decreases the construction weight. Nevertheless, in this case the main task of reducing the liner's mass remains unsolved.

The above mentioned solution under the patent US 5653358 should include the decisions contained in patents US 4369894 and US 3655085. Proposed in this case is the specific execution of cylinder with spherical shape. However, such an execution of the cylinder with spherical shape is not optimal from the point of view of equal tension stress throughout all stress-related reinforcing strands.

The common shortcoming of above mentioned solutions is that they do not provide the solution of how to optimize the cylinder construction in its totality, namely, how to select a rational form of liner's bottom and rational distribution of reinforcing fibres within the composite shell.

Used as a prototype of the proposed solution is the solution under the patent RU 2175088 C1, from the 20. 10. 2001.

The technical result of this solution is achieved in the way as follows: in a pressure vessel with spherical shape and internal hermetic shell plus the external power shell of composite material, the internal hermetic thin-walled shell - the liner, is made of all-metal aluminum alloy without using any welded or any other connections of its parts, whereas the outer shell is made of organoplastics on the basis of Armos brand organic fibers with multizone geodetic laying on a spherical surface and slope angles to the axis of the vessel from 5.7° up to 73.15°.

However, this solution does not provide the condition of consistency for the deformation of aluminium alloy and composite because of differences in their mechanical properties, which results in one-time use of received cylinder and does not allow to use it for multiple cyclic application.

The task to be solved by the claimed invention consists in the creation of a new optimal geometry of the cylinder liner to increase the cylinder's operation safety with a considerable weight reduction in comparison with the existing structures. This will allow to enlarge dramatically also the application segments of lightweight composite pressure vessels.

The technical result from the use of the declared design is to increase the solidity and reliability with minimum weight at extreme loads. The invention advantage consists in simplicity of its technological implementation along with the consumer's appeal because the latter becomes free from any risk of high pressure cylinder's destruction when achieving the extreme loads. This broadens possibilities to use such an invented cylinder, especially in conditions of life and everywhere compressed gases are used in the transportation vehicles.

The technical result is achieved by the fact that the high pressure cylinder contains the aperture, at least in one of the bottoms, the thin-walled hermetizing liner from the thin-walled stainless steel and the external power shell of composite material, constituted by a combination or a cordage from the grouped tapes that are oriented on the liner surface in geodesic directions with different angles and linear densities of reinforcement material, which is applied in threads. In this situation, the meridian's profile, constituting the surface of bottom liner, has the shape of a curve, densely covering the formative meridians of interfaced shell part layers, the first of them, starting from the aperture up to the second one, forms the surface of geodesic isotensoid, whereas those subsequent, according to the sections of their polar apertures, coincide with conditional flat surface of a given form and satisfy the condition as follows:

$$\sin \gamma = \frac{\pi p r^2}{2 \sum_{i=1}^{k} T n_i \cos \varphi_i},$$

where $\gamma$ is the angle between the rotation axis and the normal to the surface of the evaluated section, $T$ - the breaking-up efforts of reinforcing threads, $n$ - reinforcement power (the number of threads) in the $i$ - th layer of the shell, $\varphi_i$ - the reinforcement angle of the evaluated section, $r$ - the radius of considered section, $p$ - the pressure in the cylinder, $k$ - the number of inserted layers or shells.

In order to fabricate a functional cylinder structure, it is important that the maximum diameter of geodesic isotensoid surface be 1.2 - 1.8 times more than that of polar aperture in the second nested layer-shell. What is also important for functioning of the structure is that the maximum diameters of nested layers-shells be in the interval between the polar apertures of neighbouring layers-shells.

The functioning of the declared structure proves to be the most effective when trajectories for placing the reinforcement strands in layers-shells are those of geodesic directions for the evaluated layer-shell and are determined by the ratio of the diameter of its polar aperture to the current diameter.

When raised additionally, the task is solved as well taking into account that the total linear density, quantity, of tapes in all layers-shells with their unidirectional fibers placed in them appropriately had been chosen from the condition

$$\sum_{i=1}^{k} n_i \cos \varphi_{0i} = \frac{\pi p R_c^2}{2T}$$

where Rk is the maximum radius of the cylinder, and also due to the fact that the linear density, quantity, of tapes with accordingly placed in them unidirectional threads on each of the inserted layers-shells had been chosen from the condition

$$n_k \cos \varphi_{0k} = \frac{\pi p R_k^2}{2T} - \sum_{i=1}^{k-1} n_i \cos \varphi_i$$

where Rc is the maximal radius of inserted layer-shell.

A partial modification of the proposed solution can be the choice of a sphere for the deemed flat surface, and the number of 3 inserted layers- shells. It is also to note in this case that the diameters of polar apertures of inserted layers-shells are 0.1, 0.5 and 0.765 of the maximum cylinder's diameter.

A partial modification of the proposed solution can also be the choice of conical surface as the deemed smooth surface, and the number 6 of inserted layers-shells, for them the diameters of polar apertures are 0.3, 0.42, 0.53, 0.65, 0.76 and 0.88 from the maximal cylinder's diameter.

The advantage of the invention consists in simplicity of its implementation and consumer appeal.

The invention is explained in further detail description of the various execution examples with reference to the drawings.

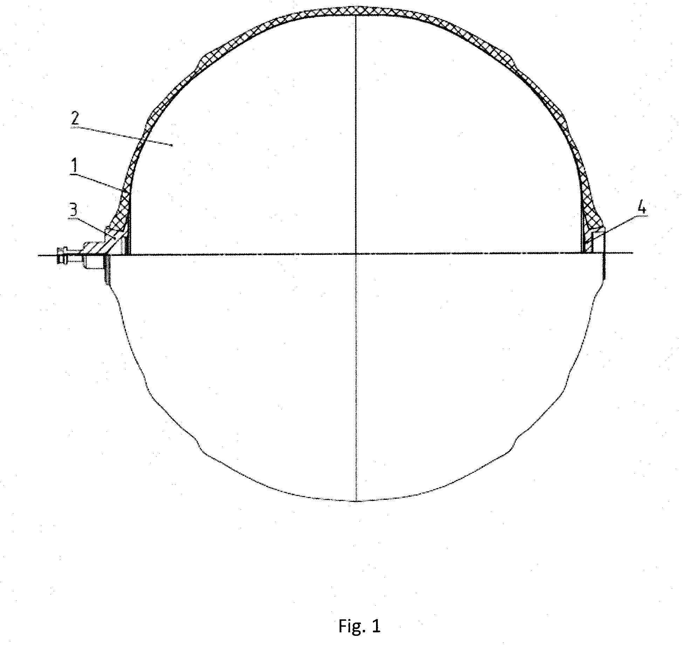

Shown in Fig. 1 is a general view of the layered cylinder.

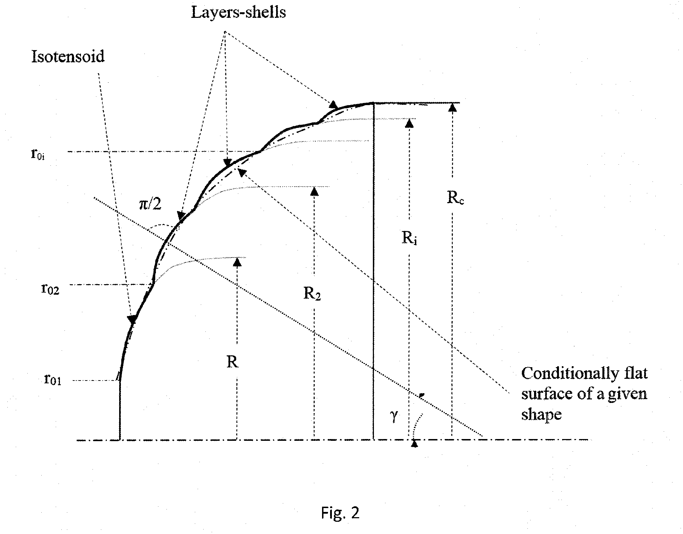

Presented in Fig. 2 is the total contour of the meridian, forming the surface of the bottom of the cylinder.

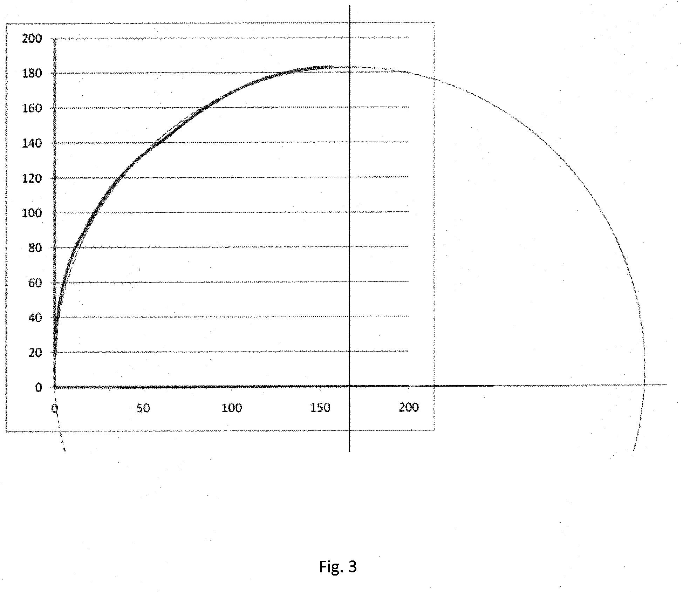

Shown in Fig. 3 is an example form of the liner' surface, of which the shell had been formed of three winding zones.

Presented in Fig. 4 is an examplar implementation of spherical shell, formed of three zones of winding, and the shape of external cylinder surface.

Shown in Fig. 5 is an example of the technological implementation of reinforcing tape layers-shells on the surface of the liner, the form of which is selected as based on the use of this invention.

Shown in Fig. 1, the one of execution examples, is the high-pressure cylinder with a solid, shell, body **1**, for example, from a composite material in the form of a multilayer carcass, the layers of which had been obtained by the winding of cross-sectional unidirectional strands of fiber glass or carbon fibre impregnated polymer binder. During the manufacturing process of the former - the body **1,** a thin-walled steel liner **2** had been wrapped in and the flanges **3** and **4** mounted through the latter.

Taken in general, the composite shell of such a cylinder is being carried out on the first stage as the designing of the rotation shell that is formed by winding the tape systems of composite material, which tapes are positioned at the φi angles to the resultant and the loaded by internal pressure. A specific feature of this approach is that there are several inter-related oprimization construction tasks being set up simultaneously.

The first of them can be formulated as follows: what is required is to find such a cylinder's distribution structure of reinforcement material, which would provide a minimum weight of its structure at calculated cylinder's load by internal pressure.

The second task is formulated as follows: what is required is to find such a cylinder's geometry, at which the internal pressure-induced deformations of composite material in the loaded cylinder would be equal over the whole surface so as to be able to fullfill limitations in terms of cyclic liner's material solidity for a period determined by the designated period of service.

Apllied as the basis for designing the cylinder is the theory of momentless rotation shells, while what is neglected in general equations of the underlying theory of shells is the impact on the shell of drive-related transversal, intersecting, forces, torques and bendings. The only unknown items remain those stress-related: meridional $\sigma\alpha$, ring $\sigma\beta$-called membraneous stress values. In this case, instead of analysing the shell as a construction, the shell's median surface is being evaluated, and instead any stresses occurring in the $\sigma i$ material, those evaluated are the $T_1$, $T_2$ normal drive-related forces.

For as much as the evaluated shell is a statically determinable entity, the $T_1$ and $T_2$ meridional and annular in-shell efforts that occur due to the internal pressure action can be found regardless of shell-related material parameters. Assuming there is $r_0$-radius aperture at the shell top, the contour of which is free from any load, then the $T_1$ and $T_2$ efforts must be determined from the ratios

$$T_1 = \frac{PR_2}{2}\left(1 - \frac{r_0^2}{r^2}\right); \quad T_2 = \frac{PR_2}{2}\left[2 - \frac{R_2}{R_1}\left(1 - \frac{r_0^2}{r^2}\right)\right],$$

for a closed shell with the plugged polar aperture

$$T_1 = \frac{pR_2}{2} \quad , \quad T_2 = \frac{pR_2}{2}\left(2 - \frac{R_2}{R_1}\right),$$

where $p$ is the internal pressure intensity inside the evaluated shell, $R_1$, $R_2$ are the main radii of the shell's curvature.

As a rule, when considering the first task of cylinder designing, an algorithm is being used as based on the criterion of equal tensity ($T = const$ or $\sigma 1^* = const$) across the whole surface of construction material, for which purpose the rational form of the middle bottoms surface of the shell construction must be determined. Selected for restrictions is the matching condition of fibers, bundles, with the φ reinforcement angle to the trajectories of maximal principal stress values. More appropriate for the numerical methodology of designing the rational form of cylinder's median bottoms surface is to use the algorithm, built on the determination of the γ angle between the shell rotation axis and the perpendicular to the surface at its cross-sectional aspect when evaluating the balance part of the shell that is situated above the given cross-section

$$2\pi r\, T_1 \sin\gamma \;=\; 2\pi \int_{r_0}^{r} prdr \;+\; Q_1 \quad ,$$

where $\gamma$ is the angle between the axis of shell rotation and the perpendicular to the surface in the evaluated $r$ section,
$Q_1$ is the axial force in the shell section with $r_0$ radius.

Due to the fact that the meridional effort for the composite shell is equal to the sum the meridional efforts in its individual layers, i.e.

$$T_1 = \sum_{i=1}^{k} T_i n_i \cos\varphi_i$$

you can obtain the following relation

$$\sin\gamma = \frac{\pi \int_{r_1}^{r} prdr + Q_1}{\sum_{i=1}^{k} T_i n_i \cos\varphi_i}$$

and using the expressions

$$y = \int_{r_1}^{r} tg\gamma\, dr \qquad R_1 = \frac{ds}{d\gamma} \quad ,$$

and $R_2 = r/\cos\gamma$, you can numerically determine the coordinates $r, y$ and the main curvature radii $R_1, R_2$ of the given surface.

For the case of constant pressure acting inside the cylinder, this ratio takes the aspect as follows

$$\sin \gamma = \frac{\pi p r^2}{2 \sum_{i=1}^{k} T_i n_i \cos \varphi_i}$$

It is obvious that the surface shape of cylindric bottoms depends substantially of the $T_i n_i$ constants, i.e. of the existing efforts within the threads of reinforcing material and of their number within the different layers that are forming the cylinder shell, which layers are in turn expressed through the **p** load and characteristic dimensions of the shell.

When designing the optimal cylinder, it is advisable to use the efforts permanency condition in every thread inside each section, their $T_i = \bar{t}$ equality for each layer and conditions of geodetic laying of threads on the $\sin \varphi_i = r_0/r$ surface for each layer of the material.

In this case, the shell is represented a sort of a shell consisting of its several parts as nested within each other - see Fig. 2.

To build the geometric shape of such a shell, it is expedient to use the following algorithm.

What is set up is some notional surface and its $r01, r02, r03,...... r0n$ cross-sections that are determing the number of layers, forming a shell.

Those set up are the initial values of the radii of $R_1, R_2, R_3, ....., Rn$ imaginary cylindrical surfaces, nested in a shell with the $Rc$ maximal diameter. A condition is simultaneously to be taken into account that the $r\,i+1 < Ri < r\,i+2$.

Sequentially, starting with the first segment of $r01 - r02$ for each imaginary shell with $Ri$ cylinder radius, using

$$n_i \cos \varphi_i = \pi\, p r^2 / 2\bar{t} - \sum_{j=1}^{i-1} n_j \cos \varphi_j \qquad \text{for each } \cos \varphi_i = \sqrt{1 - (r_i / R_i)^2}$$

the dependency zone,

here is the $n_i$ value calculated.

Using the obtained $\bar{t}n_i$ values, the $\gamma(r)$ angle of each $i$ zone is determined

$$\sin \gamma = \frac{\pi p r^2}{2 \sum_{i=1}^{k} \bar{t} n_i \cos \varphi_i}$$

and accordingly determined are the $x, y$ coordinates as well as the $R_1, R_2$ main curvature radii for the meridian profile, forming the shell bottom surface of the cylinder.

The approximation is evaluated of obtained surface with the original conditional surface by comparing the $yi$ coordinates in the specified $r0i$ sections. In absence of their coincidence, the new $Ri$ radii of imaginary surfaces are selected, and the process is repeated.

It is obvious that the first segment from cylinder's polar aperture with the $r_{01}$ radius up to the beginning of the second layer with $r_{02}$ radius always include one layer. This is why the task decision on this segment always leads to the fact that the surface shape of this segment exclusively belongs to the surface of geodesic isotensoid.

Based on the design considerations, the cylinder always has the embedded flanges - Fig. 1 Pos. **3**, **4** that are known to ensure the cylinder's functioning. Due to an increase of contact pressure in the flanges contact zone with the surface of composite, this zone requires a special correction. Because of known recommendations that this contact width should be at least 1. 225 $r_{01}$ (see I.F. Obrazcov, V.V. Vasiliev and V.A. Bunakov, Optimal reinforcement of rotation shells from composite materials, M, Engineering, 1977), the minimum length of the first zone must be at least 1.225 $r_{01}$.

From the technological point of view, the shell is fabricated by winding the tape, consisting of threads and having some final $b$ width. In the polar aperture area, due to the finite b width of tape, the shell develops certain thickening, which, as a rule, is wider than the contact surface of the liner's flange. In virtue of this, the minimal length of the first zone should not be not less than 1.225 $r_{01}$ plus half the width of the process tape.

On the other hand, the second layer - the shell with $r_{02}$ radius of polar aperture and all of the following layers are also wound with technological tape of certain b width, not always equal to the b tape width, forming the first layer. This is why in order to ensure the optimum cylinder's performance where the second layer begins, the maximal radius of cylindrical part of the first imaginary shell, the isotesoid, must prevail $r_{02} + b/2$, which in numerical terms leads to the value of 1.3 - 1.8 times the $r_{02}$ diameter of polar aperture of the second nested layer-shell.

Analogically to the evaluation of the pair of first layers, it is necessary for all sequential layers of shells to meet the condition that the maximal diameters of layers-shells were situated in the interval between the polar apertures in the neighbouring layers of shell.

$$n_k \cos \varphi_{0k} = \frac{\pi p R_k^2}{2T} - \sum_{i=1}^{k-1} n_i \cos \varphi_i$$

To ensure the equal solidity, the condition should be satisfied so as to set up a necessary number of reinforcing threads passing through the given area, the reinforcement capacity.

It is also evident that the total reinforcement capacity should be chosen from the condition

$$\sum_{i=1}^{k} n_i \cos \varphi_{0i} = \frac{\pi p R_c^2}{T} \quad .$$

In this case, the cylinder' solidity is provided for a given level of effective domestic pressure.

Fundamentally, during the technological implementation of cylinder'shell, the reinforcement angles may be selected from the at-random terms and considerations.

However, from a technological point of view, the most profitable in terms of the winding implementation is that for each shell-layer, the reinforcement trajectory coincided with the geodetic direction on the given surface, i.e. the trajectories were determined by the diameter ratio of its polar aperture in the considered layer to the current diameter. In this case, a steady laying process of the reinforcing material tapes is ensured on the evaluated surfaces.

In this case, for the design of spherically shaped cylinder, the most rational design concept consists in a shell from the three layers of shells being nested one into the other. Provided in this case is a good enough approximation of the surface of the cylinder to the surface of a sphere, both on the inner and the outer surface - see fig. 3, pos. **4**, **5**. The above design is optimal in terms of solidity. From the technological point of view, this is also the case where the product fabrication is the least time-consuming. For such a designed construction, the best approximation according to the inner and outer surface to that spherical is provided under the condition that the diameters of polar apertures of nested layers-shells are 0.1, 0.5 and 0.765 of the maximal cylinder's diameter.

As for the construction of a cylinder with conical bottoms, the best approximation according to the inner and outer surface toward to that of the cone is provided when the condition is satisfied that the number of nested layers-shells is six, whereas diameters of polar apertures of nested layers-shells equal to 0.3, 0.42, 0.53, 0.65, 0.76 and 0.88 of the maximal cylinder's diameter.

As an example of realization of the invention, a construction is proposed of composite high-pressure spherically shaped cylinder, developed by the applicant according to the solution as proposed in this description. The above cylinder is made of carbon fiber-reinforced plastics with a tensile strength along the fibres ($\sigma$1 - 5000 MPa) being designed for inner pressure p = 110 MPa - experimental value of the destructive pressure, having the R 185 mm maximal radius and the r -18 mm polar aperture radius. The main parameters that are implemented in the design - Fig. **4**, **5**:

the total thickness of all layers of shells on the 3.8 mm maximal diameter, the internal volume of 25 litres, 4.2 kg weight.

Such vessel parameters provide its minimal weight and warrantied destruction on the maximal diameter, which is confirmed by experimental results.

The creation of proposed design solution of the above cylinder signified a real opportunity to use high-pressure vessels made of different materials using the thin-walled metallic inner shell - liner of arbitrary shape. Both fabrication and testing of high-pressure vessels along with the proposed liner for sealing them confirmed their reliability and efficiency. The technical result of the invention is achieved in the ranges of specified ratios that were obtained by the computation and experimentation means and modalities.

The present invention is not limited by the above-described forms of execution that are given only to illustrate the invention, and may have modifications within the inventions formula frame.

**Claims**

1. A high-pressure cylinder (1) containing an outlet neck, at least in one of bottoms, a thin-walled sealing liner (2) from a thin-walled stainless steel and an external power shell of a composite material, formed by a combination of layers-shells with grouped tapes being oriented on the surface of the liner (2) in geodesic directions with different angles and different linear density, respectively located reinforcement material-made threads, thus the meridian profile, forming the surface of liner's bottom, has the shape of a smooth curve, fitted on the forming meridians of parts of layer-shells nested one into the other, *characterized by the fact that* the first of layer shell is from the neck to the second layer shells being as the surface of a geodesic isotensoid, and further coincide with the surface of the liner (2) in the sections of their polar apertures and satisfy a condition

$$\sin \gamma = \frac{\pi p r^2}{2\sum\limits_{i=1}^{k} T n_i \cos \varphi_i}$$

where $\gamma$ is an angle between the rotation axis and the perpendicular to the surface in the evaluated cross-section, $T$ - efforts for breaking the reinforcing threads, $n$ - a reinforcement power, a number of threads, in the $i$ - the layer of the shell, $\varphi i$ - reinforcement angle in an examining cross-section, $r$ is a radius of the considered cross-section, $p$ is a pressure in the cylinder, $k$ is a number of inserted layers-shells.

2. According to the 1 st claim, the cylinder (1) is *characterized by the fact that* the maximal diameter of geodesic isotensoid is 1.2 - 1.8 times the diameter of polar aperture in the second nested layer-shell.

3. According to the 1 st claim, the cylinder (1) is *characterized by the fact that* the maximal diameters of layers-shells nested one into the other are situated in the interval between the polar apertures in the neighbouring layers-shells.

4. According to the 1st claim, the cylinder (1) is *characterized by the fact that* the trajectories of laying the reinforcing threads in the layers-shell are those of geodesics directions for the evaluated layer-shell and are determined by the ratio of diameter of its polar aperture to the current diameter.

5. According to the 1st claim, the cylinder (1) is *characterized by the fact that* the total linear density (the number) of tapes in all layers-shells with appropriately placed in them unidirectional fibers is chosen from the condition

$$\sum_{i=1}^{k} n_i \cos \varphi_{0i} = \frac{\pi p R_c^2}{2T}$$

where $R_c$ is the maximal radius of the cylinder.

6. According to the 1st claim, the cylinder (1) is *characterized by the fact that* the linear density (the number) of tapes with appropriately placed in them unidirectional threads on each of the nested layers-shells is chosen from the condition

$$n_k \cos \varphi_{0k} = \frac{\pi p R_k^2}{2T} - \sum_{i=1}^{k-1} n_i \cos \varphi_i$$

where $R_k$ is the maximal radius of the nested layer-shell.

7. According to the 1 st claim, the cylinder (1) is *characterized by the fact that* the a sphere is selected as the conditional flat surface, and the number of nested layers-shells is three.

8. According to the 7th claim, the cylinder (1) is *characterized by the fact that* the diameters of polar apertures in the nested layers-shells equal 0.1, 0.5 and 0.765 of the maximal cylinder's diameter.

9. According to the 1st claim, the cylinder (1) is *characterized by the fact that* a conical surface is selected as the conditional flat surface, and the number of nested layers-shells is six.

10. According to the 9th claim, the cylinder (1) is *characterized by the fact that* the diameters of polar apertures of nested layers - shells equal 0.3, 0.42, 0.53, 0.65, 0.76 and 0.88 of the maximal cylinder's diameter.

**Patentansprüche**

1. Ein Hochdruckzylinder (1) mit einem Austrittstutzen wenigstens in einem Boden, mit einem dünnwandigen Dichteinsatz (2) aus dünnwandigem rostfreiem Stahl und einer äußeren Leistungsummantelung aus Verbundmaterial, bestehendem aus kombinierten Schichten-Mänteln mit gebündelten Streifen, orientierten auf der Oberfläche des Einsatzes (2) in geodätischen Richtungen mit unterschiedlichen Winkeln und unterschiedlicher linearen Dichte mit entsprechend positionierten Fasern, hergestellten aus einem Verstärkungsmaterial, so dass das Meridianprofil, bildendes die Bodenfläche des Einsatzes die Form einer glatten Kurve hat, die auf den Profilmeridianen der verschachtelten Schichten-Mänteln befestigt ist, *dadurch gekennzeichnet, dass* die erste Schicht-Mantel von dem Stutzen zu der zweiten Schicht-Mantel als eine Oberfläche des geodätischen Isotensoids ausgeführt ist und dass diese *(Schichten-Mäntel)* auch mit der Oberfläche des Einsatzes (2) in Abschnitten ihrer polaren Öffnungen stimmen und erfüllen die Bedingung

$$\sin \gamma = \frac{\pi p r^2}{2 \sum_{i=1}^{k} T n_i \cos \varphi_i}$$

wobei der Winkel $\gamma$ zwischen der Schwenkachse und der Senkrechte zu der Oberfläche in dem betrachteten Querschnitt ist, $T$ - das Bestreben um Unterbrechung der Verstärkungsfasern, $n$ - die Verstärkungskraft, die Anzahl der Fasern in der $i$-Schicht des Mantels; $\varphi i$ - der Versteifungswinkel in dem Versuchsquerschnitt, $r$ ist Radius des betrachteten Querschnitts, $p$ ist der Zylinderdruck, $k$ ist die Anzahl der Zwischenschichten-Mäntel.

2. Nach Anspruch 1 ist der Zylinder (1) *dadurch gekennzeichnet, dass* der maximale Durchmesser des geodätischen Isotensoids 1, 2 - 1,8 mal größer als der Durchmesser der polaren Öffnung in der zweiten Zwischenschicht-Mantel ist.

3. Nach Anspruch 1 ist der Zylinder (1) *dadurch gekennzeichnet, dass* sich die maximalen Durchmesser von den verschachtelten Schichten-Mänteln in dem Zwischenraum zwischen den polaren Öffnungen in den anliegenden Schichten-Mänteln befinden.

4. Nach dem ersten Anspruch ist der Zylinder (1) *dadurch gekennzeichnet, dass* die Trajektorie der Verlegung von Verstärkungsfasern in den Schichten-Mänteln die geodätischen Streichlinien für den betrachteten Schicht-Mantel sind und sind durch das Verhältnis des Durchmessers deren polaren Öffnung zu dem aktuellen Durchmesser bestimmt.

5. Nach dem ersten Anspruch ist der Zylinder (1) *dadurch gekennzeichnet, dass* die gesamte lineare Dichte (Anzahl) der Streifen in allen Schichten-Mänteln, in denen die einseitig gerichteten Fasern in geeigneter Weise positioniert sind, aus der Bedingung gewählt

$$\sum_{i=1}^{k} n_i \cos \varphi_{0i} = \frac{\pi p R_c^2}{2T}$$

wobei $R_c$ der maximale Radius des Zylinders ist.

6. Nach dem ersten Anspruch ist der Zylinder (1) *dadurch gekennzeichnet, dass* die gesamte lineare Dichte (Anzahl) der Streifen, in denen die einseitig gerichteten Fasern auf jedem Zwischenschicht-Mantel entsprechend gelegen sind, aus der Bedingung ausgewählt

$$n_k \cos \varphi_{0k} = \frac{\pi p R_k^2}{2T} - \sum_{i=1}^{k-1} n_i \cos \varphi_i$$

wobei $R_k$ der maximale Radius der Zwischenschicht-des Mantels ist.

7. Nach Anspruch 1 ist der Zylinder (1) *dadurch gekennzeichnet, dass* die sphärische Fläche als eine bedingte flache Oberfläche gewählt ist und die Anzahl der Zwischenschichten-Mäntel ist drei.

**8.** Nach dem Anspruch 7 ist der Zylinder (1) *dadurch gekennzeichnet, dass* die Durchmesser der Löcher in den Zwischenschichten-Mänteln gleich 0,1, 0,5 und 0,765 Vielfache des maximalen Zylinderdurchmessers sind.

**9.** Nach Anspruch 1 ist der Zylinder (1) *dadurch gekennzeichnet, dass* die konische Oberfläche als eine bedingte flache Oberfläche ausgewählt ist und die Anzahl der Zwischenschichten-Mäntel ist gleich sechs.

**10.** Nach Anspruch 9 ist der Zylinder (1) *dadurch gekennzeichnet, dass* die Lochdurchmesser der polaren Öffnungen von den Zwischenschichten-Mänteln gleich 0,3, 0,42, 0,53, 0,65, 0,76 und 0,88 Vielfache des maximalen Zylinderdurchmessers sind.

**Revendications**

**1.** Cylindre haute pression (1) comprenant un goulot de sortie au moins dans un fond, une pièce intercalaire d'étanchéité à parois mince (2) en acier inoxydable fin et une enveloppe extérieure de renfort en matériau composite constitué d'une combinaison de couches-enveloppes avec bandes regroupées et orientées sur la surface de la pièce intercalaire (2) dans les directions géodésiques d'angles variés et de densité linéaire variée, avec fibres positionnées de manière adéquate et fabriquées en matériau renforcé de sorte que la forme du profil méridien formant la surface du fond de la pièce intercalaire présente une courbe lisse, fixées sur les méridiens formant des parties des couches-enveloppes insérées l'une dans l'autre, *caractérisé en ce que* la première couche de l'enveloppe située entre le goulot et la deuxième couche-enveloppe est réalisée en tant que surface de l'isotensoïde géodésique et que les *(couches-enveloppes)* coïncident en outre avec la surface de la pièce intercalaire (2) dans les sections de leurs orifices polaires et satisfont à la condition

$$\sin \gamma = \frac{\pi p r^2}{2 \sum_{i=1}^{k} T n_i \cos \varphi_i}$$

où $\gamma$ est l'angle entre l'axe de rotation et la perpendiculaire à la surface dans la section évaluée. $T$ - effort pour rompre les fibres de renfort, $n$ - force de renfort, nombre de fibres dans la $i$-ième couche de l'enveloppe, $\varphi i$ - angle de renfort dans la section d'essai, $r$ est le rayon de la section envisagée, $p$ est la pression dans le cylindre, $k$ est le nombre de couches-enveloppes insérées.

**2.** Selon la revendication 1, le cylindre (1) *est caractérisé en ce que* le diamètre maximum de l'isotensoïde géodésique est de 1,2 à 1,8 fois plus grand que le diamètre de l'orifice polaire dans la seconde couche -enveloppe insérée.

**3.** Selon la revendication 1, le cylindre (1) *est caractérisé en ce que* les diamètres maximum des couches-enveloppes insérées l'une dans l'autre sont situés dans l'espace entre les orifices polaires dans les couches-enveloppes adjacentes.

**4.** Selon la première revendication, le cylindre (1) *est caractérisé en ce que* les trajectoires de pose des fibres de renfort dans les couches-enveloppes sont les directions géodésiques pour la couche-enveloppe évaluée et sont déterminées par le rapport du diamètre de son orifice polaire au diamètre réel.

**5.** Selon la première revendication, le cylindre (1) *est caractérisé en ce que* la densité globale linéaire (nombre) des bandes dans l'ensemble des couches-enveloppes dans lesquelles les fibres unidirectionnelles sont placées de manière appropriée est fondée sur la condition

$$\sum_{i=1}^{k} n_i \cos \varphi_{0i} = \frac{\pi p R_c^2}{2T}$$

où $R_c$ est le rayon maximum du cylindre.

**6.** Selon la première revendication, le cylindre (1) *est caractérisé en ce que* la densité globale linéaire (nombre) des bandes dans lesquelles les fibres unidirectionnelles sont placées de manière appropriée, est fondée sur la condition

$$n_k \cos \varphi_{0k} = \frac{\pi p R_k^{\,2}}{2T} - \sum_{i=1}^{k-1} n_i \cos \varphi_i$$

où $R_c$ est le rayon maximum de la couche-enveloppe insérée.

7. Selon la revendication 1, le cylindre (1) *est caractérisé en ce que* la surface sphérique est choisie en tant que surface plate conditionnée et le nombre des couches-enveloppes est trois.

8. Selon la revendication 7, le cylindre (1) *est caractérisé en ce que* les diamètres des orifices polaires dans les couches-enveloppes insérées égalent à 0,1, 0,5 et 0,765 fois le diamètre maximum du cylindre.

9. Selon la revendication 1 le cylindre (1) *est caractérisé en ce que* la surface conique est choisie en tant que surface plate conditionnée et le nombre des couches-enveloppes est six.

10. Selon la revendication 9 le cylindre (1) *est caractérisé en ce que* les diamètres des orifices polaires insérés dans les couches-enveloppes égalent à 0,3, 0,42, 0,53, 0,65, 0,76 et 0,88 fois le diamètre maximum du cylindre.

Fig. 1

EP 2 716 957 B1

Fig. 2

13

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1023011 A
- WO ER0300931 A
- WO 9927293 A
- WO 9913263 A
- US 4925044 A
- RU 2150634
- US 5494188 A
- US 5538680 A
- US 5653358 A
- US 5862938 A
- US 5938209 A
- US 5979692 A
- US 6190598 B
- US 6202674 B
- US 6230922 B
- US 2003111473 A
- US 6810567 B
- US 3066822 A
- US 3446385 A
- US 5027292 A
- US 5822838 A
- US 5918759 A
- WO 03029718 A
- RU 2255829

- JP 2005133847 B
- WO 2005022026 A
- RU 2149126
- RU 2094695
- RU 2077682
- RU 2001115743
- RU 2000123739
- RU 2140602
- RU 2187746
- RU 93049863
- RU 2065544
- RU 2001115191
- RU 2003115384
- RU 2002101904
- GB 1161846 A
- EP 0497687 A
- US 5287988 A
- RU 2256844 C1
- EP 0714753 A
- US 7497919 B
- US 2007062959 A
- US 3655085 A
- US 4369894 A
- RU 2175088 C1

**Non-patent literature cited in the description**

- **I.F. OBRAZCOV ; V.V. VASILIEV ; V.A. BUNAKOV.** Optimal reinforcement of rotation shells from composite materials. *M, Engineering,* 1977